(19) Europäisches Patentamt
European Patent Office
Office européen des brevets

(11) **EP 4 717 665 A1**

(12) **EUROPEAN PATENT APPLICATION**

(43) Date of publication:
**01.04.2026 Bulletin 2026/14**

(21) Application number: **25201434.5**

(22) Date of filing: **10.09.2025**

(51) International Patent Classification (IPC):
**C01B 3/047** (2026.01)   **C22C 19/03** (2006.01)
**B01J 19/02** (2006.01)   **F02C 3/22** (2006.01)
**H01M 8/0606** (2016.01)   **H01M 8/22** (2006.01)
**C22C 38/00** (2006.01)   **C22C 38/40** (2006.01)

(52) Cooperative Patent Classification (CPC):
**C01B 3/047; B01J 19/02; C22C 19/03;**
**C22C 38/00; C22C 38/40;** B01J 2219/0236;
B01J 2219/029; C01B 2203/0277; C01B 2203/142;
C01B 2203/1614

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **12.09.2024 KR 20240125184**
**31.10.2024 KR 20240153013**
**30.05.2025 KR 20250071519**

(71) Applicant: **SK Innovation Co., Ltd.**
**Seoul 03188 (KR)**

(72) Inventors:
• **SUNG, Jong Baek**
**34124 Daejeon (KR)**

• **CHOI, Won Seok**
**34124 Daejeon (KR)**
• **PARK, Hyun Joon**
**34124 Daejeon (KR)**
• **CHOI, Jae Suk**
**34124 Daejeon (KR)**
• **LEE, Ji Yun**
**34124 Daejeon (KR)**
• **IM, Ju Hwan**
**34124 Daejeon (KR)**

(74) Representative: **Prüfer & Partner mbB**
**Patentanwälte · Rechtsanwälte**
**Sohnckestraße 12**
**81479 München (DE)**

(54) **AMMONIA DECOMPOSITION REACTOR, HYDROGEN PRODUCTION APPARATUS AND METHOD FOR PRODUCING HYDROGEN USING THE SAME**

(57)    An ammonia decomposition reactor, a hydrogen production apparatus and a method for producing hydrogen are provided. The ammonia decomposition reactor includes a first chamber and a second chamber, wherein the first chamber is configured to operate at an operating temperature of 410°C or less, the first chamber includes at least one selected from the group consisting of carbon steel, low alloy steel, stainless steel, and a nickel-based alloy, and the second chamber includes a nickel-based alloy ($N_T$) satisfying Equation 1 below.

[Equation 1]

$$T \leq 15 \ \mu m,$$

in Equation 1, T represents the maximum nitrided depth when the nickel-based alloy ($N_T$) is prepared as a cylindrical specimen having a diameter of 2 mm and a height of 200 mm, and the cylindrical specimen is exposed to a gas stream comprising 97.2% by volume $NH_3$, 2.1% by volume $H_2$, and 0.7% by volume $N_2$ in a temperature environment of 500°C for 100 hours.

[FIG. 1]

EP 4 717 665 A1

**Description**

[BACKGROUND OF THE INVENTION]

1. Field of the Invention

The disclosure of the present application relates to an ammonia decomposition reactor, a hydrogen production apparatus, and a method for producing hydrogen using the same.

2. Description of the Related Art

Hydrocarbon-based fossil fuels such as coal and oil are used as energy sources in various industrial fields. However, such hydrocarbon-based fossil fuels are finite in quantity and are gradually being depleted. Further, carbon is continuously emitted during combustion, thereby accelerating climate change and global warming.

Consequently, there is a growing global need for renewable and environmentally friendly new energy sources.

Hydrogen has attracted attention as a potential energy source for achieving carbon neutrality due to its high energy storage capacity relative to its mass and its ability to emit no carbon during combustion.

Recently, research and development have been conducted on technologies for producing hydrogen. Ammonia is being utilized as a hydrogen source because it can store and transport hydrogen at high densities, does not emit carbon upon decomposition, and can be decomposed into nitrogen and hydrogen only.

[SUMMARY OF THE INVENTION]

An object of the present disclosure is to provide an ammonia decomposition reactor with improved reaction reliability and energy efficiency.

An object of the present disclosure is to provide a hydrogen production apparatus with improved reaction reliability and energy efficiency.

An object of the present disclosure is to provide a method for producing hydrogen that exhibits improved reaction reliability and energy efficiency.

An ammonia decomposition reactor according to a general aspect of the present disclosure includes: a first chamber arranged to be fed with a first gas stream including ammonia; and a second chamber arranged to be fed with a second gas stream, which is discharged from the first chamber and includes ammonia, nitrogen and hydrogen, wherein the first chamber is configured to operate at an operating temperature of 410°C or less, wherein the first chamber includes at least one selected from the group consisting of carbon steel, low alloy steel, stainless steel, and a nickel-based alloy, and wherein the second chamber includes a nickel-based alloy ($N_T$) satisfying Equation 1 below:

$$[\text{Equation 1}]$$

$$T \leq 15 \ \mu m,$$

In Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream including 97.2% by volume $NH_3$, 2.1% by volume $H_2$, and 0.7% by volume $N_2$ in a temperature environment of 500°C for 100 hours, and the nitrided depths are measured using scanning electron microscopy (SEM) and energy dispersive X-ray spectroscopy (EDS) analysis.

In some embodiments, in Equation 1, T may be $\leq 13 \ \mu m$.

In some embodiments, the first gas stream may include ammonia in an amount of 90% by volume to 100% by volume with respect to the entire first gas stream volume.

In some embodiments, the second chamber may be configured to operate at an operating temperature of more than 410° C, optionally in a range from greater than 410°C up to 800°C.

In some embodiments, the second chamber may be formed of the nickel-based alloy ($N_T$). In some embodiments, the nickel-based alloy ($N_T$) may include one or more alloys selected from the group consisting of UNS N06601, UNS N06625, UNS N06690, UNS N07718, UNS N07792 and UNS N06002, as classified under the unified numbering system (UNS).

In some embodiments, a conversion rate of ammonia in the first chamber may be 1.4% or more, and a conversion rate of ammonia in the second chamber may be 80% to 99.95%.

In some embodiments, at least one of the first chamber and the second chamber may include a catalyst filling section filled with a catalyst.

In some embodiments, each of the first chamber and the second chamber may include the catalyst filling section filled with the catalyst, and the reactor may be configured to operate under conditions in which a first space velocity, which is the space velocity of the catalyst in the first chamber, is equal to or greater than a second space velocity, which is the space velocity of the catalyst in the second chamber.

In some embodiments, a ratio of the first space velocity of the catalyst in the first chamber to the second space velocity of the catalyst in the second chamber may be in a range of 1 to 25, optionally in a range of 1 to 5, during ammonia decomposition reactions in each of the first chamber and the second chamber.

A hydrogen production apparatus according to exemplary embodiments of the present disclosure includes the above-described ammonia decomposition reactor.

A method for producing hydrogen according to a general aspect of the present disclosure includes: introducing a first gas stream including ammonia into a first chamber; partially decomposing ammonia at a temperature of 410°C or lower in the first chamber to produce hydrogen and nitrogen; introducing a second gas stream, which is discharged from the first chamber and includes ammonia, nitrogen and hydrogen, into a second chamber; and partially decomposing ammonia in the second chamber to produce hydrogen and nitrogen, wherein the first chamber includes at least one selected from the group consisting of carbon steel, low alloy steel, stainless steel, and a nickel-based alloy, and wherein the second chamber includes a nickel-based alloy ($N_T$) satisfying Equation 1 below:

$$[\text{Equation 1}]$$

$$T \leq 15 \ \mu m,$$

In Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream including 97.2% by volume $NH_3$, 2.1% by volume $H_2$, and 0.7% by volume $N_2$ in a temperature environment of 500°C for 100 hours, and the nitrided depths is measured using scanning electron microscopy (SEM) and energy dispersive X-ray spectroscopy (EDS) analysis.

In some embodiments, in Equation 1, T may be $\leq 13 \ \mu m$.

In some embodiments, the first gas stream may include ammonia in an amount of 90% by volume to 100% by volume with respect to the entire first gas stream volume.

In some embodiments, ammonia may be partially decomposed in the first chamber so that the conversion rate of ammonia is 1.4% or more, and ammonia may be partially decomposed in the second chamber so that the conversion rate of ammonia is 80% to 99.95%.

In some embodiments, ammonia may be partially decomposed at a temperature of greater than 410 °C, optionally in a range from greater than 410 °C up to 800 °C in the second chamber to produce hydrogen and nitrogen.

In some embodiments, the method may further include filling a catalyst into at least one of the first chamber and the second chamber.

In some embodiments, the method may further include filling a catalyst into each of the first chamber and the second chamber, and the ammonia decomposition reactions may be performed in each of the first chamber and the second chamber under operating conditions in which a first space velocity, which is the space velocity of the catalyst in the first chamber, is equal to or greater than a second space velocity, which is the space velocity of the catalyst in the second chamber.

In some embodiments, a ratio of the first space velocity of the catalyst in the first chamber to the second space velocity of the catalyst in the second chamber may be maintained in a range of 1 to 25, optionally in a range of 1 to 5, during ammonia decomposition reactions in each of the first chamber and the second chamber.

The ammonia decomposition reactor according to embodiments of the present disclosure may achieve improved corrosion resistance and energy efficiency.

The hydrogen production apparatus according to embodiments of the present disclosure may maintain initial performance characteristics for a long period of time.

The method for producing hydrogen according to embodiments of the present disclosure may provide improved reaction reliability and energy efficiency.

If corrosion increases on the inner surfaces of reactors during the ammonia feeding, the efficiency of hydrogen generation may decrease, and the flow rate or purity of the generated hydrogen may become non-uniform.

However, in the ammonia decomposition reactor according to embodiments of the present disclosure, the structural stability of the reactor may be maintained, whereby the efficiency and/or reproducibility of the hydrogen production reaction may be ensured, and consequently hydrogen of uniform quality may be supplied more stably.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic view illustrating an ammonia decomposition reactor according to an embodiment of the present disclosure;
FIG. 2 is a block diagram schematically illustrating a hydrogen production apparatus according to an embodiment of the present disclosure;
FIG. 3 is a flowchart schematically describing processes of a method for producing hydrogen according to an embodiment of the present disclosure;
FIG. 4 is a graph illustrating the results of a corrosion resistance evaluation according to operating temperature when a first chamber operating time was 36 hours in Examples 1, 1-1 and 1-2;
FIG. 5 is a graph illustrating the results of a corrosion resistance evaluation according to operating temperature when the first chamber operating time was 100 hours in Examples 1, 1-1 and 1-2;
FIG. 6 is a set of scanning electron microscope (SEM) images showing cross-sections of nitrided specimens after the corrosion resistance evaluation of the chamber according to the operating time in Examples 1 to 5;
FIGS. 7A and 7B are scanning electron microscope (SEM) images showing cross-sections of nitrided specimens after the corrosion resistance evaluation of a second chamber according to the operating time in Examples 1 to 5 and Comparative Examples 1 to 4;
FIG. 8 is a graph illustrating the results of a corrosion rate evaluation of the first chamber in Examples 1 to 5; and
FIG. 9 is a graph illustrating the results of a corrosion rate evaluation of the second chamber in Example 1 and Comparative Examples 2 and 3.

[DETAILED DESCRIPTION OF THE INVENTION]

**<Ammonia decomposition reactor>**

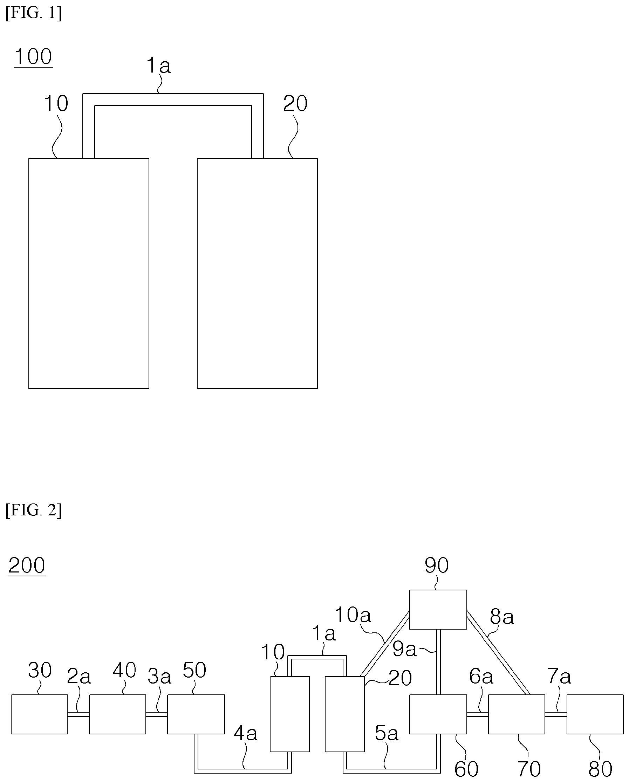

FIG. 1 schematically illustrates an ammonia decomposition reactor according to an embodiment of the present disclosure.

An ammonia decomposition reactor 100 according to embodiments of the present disclosure includes a first chamber 10 into which a first gas stream including ammonia is supplied; and a second chamber 20 into which a second gas stream, discharged from the first chamber 10 and including ammonia, nitrogen and hydrogen, is supplied. An operating temperature of the first chamber 10 is 410°C or lower.

The first chamber 10 includes at least one selected from the group consisting of carbon steel, low alloy steel, stainless steel, and a nickel-based alloy, and the second chamber 20 includes a nickel-based alloy ($N_T$) satisfying Equation 1 below.

$$[\text{Equation 1}]$$

$$T \leq 15 \ \mu m$$

In Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream including 97.2% by volume ("vol%") $NH_3$, 2.1 vol% $H_2$, and 0.7 vol% $N_2$ in a temperature environment of 500°C for 100 hours. The depths is measured using scanning electron microscopy (SEM) and energy dispersive X-ray spectroscopy (EDS) analysis.

Accordingly, the ammonia decomposition reactor 100 may be capable of suppressing or reducing internal corrosion.

As used herein, the nickel-based alloy may be used to mean all alloys that have nickel as a main component and have one or more metal elements such as chromium (Cr), iron (Fe), molybdenum (Mo), cobalt (Co), aluminum (Al), titanium (Ti), and tungsten (W) added thereto.

Further, as used herein, an alloy satisfying Equation 1 above is referred to as a "nickel-based alloy ($N_T$)" to distinguish it from general nickel-based alloys.

High-purity ammonia may rapidly corrode the chamber at temperatures exceeding 410°C. For example, when the metal surface may be brought into contact with high-purity ammonia at high temperature, a nitriding reaction may proceed at the surface of the metal.

In the ammonia decomposition reactor 100, the operating temperature of the first chamber 10 is controlled to 410°C or lower, and the second chamber 20, which may be controlled to a temperature higher than 410°C, is formed of the nickel-based alloy ($N_T$), thereby effectively preventing or reducing nitridation within the overall system.

Metals forming components such as the chamber may undergo a nitridation reaction when exposed to high-purity ammonia at high temperatures, resulting in the formation of nitridation products from the surface of the metal to the internal region. If these nitridation products are formed inside the chamber, micro-cracks may occur, the flow characteristics of the gas stream may deteriorate, and the uniformity of the reaction may be hindered. As a result, the replacement cycle of the chamber may be shortened, which may lead to an increase in maintenance costs.

Even when high-purity ammonia comes into contact with the inner surface of the first chamber 10, at temperature environments of 410°C or lower, the nitridation reaction on the surface may be significantly reduced or not accelerated by the ammonia decomposition reactor 100. For example, the above temperature environment may apply to the temperature of the ammonia, the temperature of the first chamber inner surface that is in contact with the ammonia, and/or the temperature of the catalyst through which the ammonia flows.

Furthermore, the ammonia decomposition reactor 100 may be capable of suppressing or reducing the nitridation reaction caused by ammonia on the inner surface of the second chamber 20, which includes the nickel-based alloy ($N_T$) satisfying Equation 1, even in high-temperature environments exceeding 410°C, thereby ensuring enhanced nitridation resistance.

For example, T represented by Equation 1 may be measured as follows:

When a nickel-based alloy ($N_T$) cylindrical specimen is exposed to a gas stream including 97.2 vol% $NH_3$, 2.1 vol% $H_2$, and 0.7 vol% $N_2$ in a temperature environment of 500°C for 100 hours, a nitrided or non-nitrided cylindrical specimen may be obtained. For example, 41 specimens may be obtained by cutting the nitrided cylindrical specimen at 5 mm intervals along the height from one end, in a direction perpendicular to the height. SEM images may be taken of the cut circular cross-sections of the obtained specimens using a scanning electron microscope (SEM). The elemental composition within the SEM images may be analyzed using the energy dispersive X-ray spectroscopy (EDS) function of the scanning electron microscope (SEM).

As a non-limiting example, a focused ion beam-scanning electron microscope (FIB-SEM) may be used as the scanning electron microscope. For example, a plasma-focused ion beam-scanning electron microscope manufactured by Thermo Fisher Scientific may be used.

Based on the analysis results of the elemental composition, nitrided depths may be measured from three arbitrary points on the outermost edge of the circular cross-section toward the central axis. The nitrided depth may refer to the depth in a direction perpendicular to the outer peripheral surface (side surface) of the cylindrical specimen, i.e., a direction extending toward the central axis of the cylinder. The corrosion resistance may be considered higher when the maximum value among the nitrided depths is smaller.

The operating temperature of the first chamber 10 may refer to an average temperature, and thus, the first chamber 10 may be controlled to an average temperature of 410°C or lower. The average temperature of the first chamber 10 may be calculated, for example, as the arithmetic mean temperature of the inlet and outlet temperatures of the first chamber 10, or as the mass flow-weighted average temperature or the spatial average temperature within the first chamber 10. The average temperature may be appropriately selected depending on the flow conditions, measurement environment, and system configuration, and may include an error range of ±10°C to ±1°C depending on the measurement conditions and environment.

In some embodiments, the overall temperature of the first chamber 10 may be controlled to 410°C or lower.

Therefore, the ammonia decomposition reactor 100 may achieve improved reaction reliability and energy efficiency.

In some embodiments, T in Equation 1 may be, for example, 13 μm or less, 12 μm or less, or 10 μm or less. Accordingly, the ammonia decomposition reactor 100 may provide further improved operational stability and energy efficiency. As more nitrides are formed on the inner surface of the reactor, the thermal conductivity becomes lower, and thus the efficiency is reduced.

The first gas stream may include ammonia in an amount of, for example, 90 to 100 vol%, 95 to 99.9 vol%, or 99 to 99.999 vol%.

Non-limiting examples of the first gas stream may include 99.9 vol% $NH_3$ and trace amounts of impurities. The impurities may include, for example, water vapor, nitrogen, oxygen, hydrogen, or other impurities such as tar, particulate matters and sulfur gases.

The ammonia decomposition reaction in the first chamber 10 and the second chamber 20 proceeds according to the following reaction equation and is an endothermic reaction.

[Reaction Equation] $2NH_3 \rightarrow N_2 + 3H_2$

Accordingly, ammonia is partially decomposed in the first chamber 10 to produce hydrogen and nitrogen. As a result, the second gas stream discharged from the first chamber 10 includes unreacted ammonia that remains undecomposed from the ammonia, as well as hydrogen and nitrogen as decomposition products of the ammonia.

The operating temperature, i.e., the internal temperature, of the first chamber 10 during the ammonia decomposition reaction may be maintained at 410°C or lower, for example, in a range of 250°C to 410°C, 270°C to 390°C, 270°C to 370°C, or 310°C to 370°C.

Accordingly, corrosion within the first chamber 10 may be further suppressed, and the amount of hydrogen contained in the second gas stream may be controlled.

In some embodiments, a conversion rate of ammonia in the first chamber 10 may be 1.4% or more, 1.4% to 30%, or 1.4% to 25%, or for example, 7% or more, 7.5% or more, 10% or more, 11% to 30%, or 15% to 25%.

The ammonia conversion rate (%) may be calculated using the following equation:

Ammonia conversion rate (%) = {(Supply ammonia flow rate) - (Unreacted ammonia flow rate) / (Supply ammonia flow rate)} $\times$ 100          [Equation 2]

By way of non-limiting example, the concentrations of respective gases contained in the gas mixture stream may be measured using conventional gas concentration analysis methods and the corresponding analyzers. Examples of such methods and analyzers include, for instance, gas chromatography (GC), Fourier transform infrared (FT-IR) spectroscopy, and mass spectrometry (MS). In the second chamber 20, ammonia contained in the second gas stream may be partially decomposed to produce hydrogen and nitrogen.

In some embodiments, the operating temperature of the second chamber 20 may be higher than 410°C. This may effectively decompose high-purity ammonia while further suppressing or reducing nitrification by ammonia. The operating temperature may refer to an average temperature, and reference may be made to the above-described average temperature.

In some embodiments, the overall temperature of the second chamber 20 may be controlled to be higher than 410°C.

The internal temperature of the second chamber 20 during the ammonia decomposition reaction may be maintained at 500°C or higher, for example, in a range of 500°C to 800°C, 500°C to 780°C, 510°C to 780°C, 510°C to 750°C, or 600°C to 700°C.

Therefore, corrosion within the second chamber 20 may be further suppressed, and the ammonia decomposition rate may be significantly enhanced.

In some embodiments, the conversion rate of ammonia in the second chamber 20 may be 80% to 99.95%, for example, 90% to 99.95%, 95% to 99.95%, or 99% to 99.95%, and may be determined via Equation 2.

In some embodiments, the first chamber 10 and/or the second chamber 20 may include a catalyst filling section filled with a catalyst. The catalyst filling section may comprise a catalyst bed. The catalyst filling section may be, for example, a catalyst filling tube filled with a catalyst, and the catalyst filling tube may be mounted inside the first chamber 10 and/or the second chamber 20.

In some embodiments, the catalyst included in the catalyst filling section may be a supported catalyst that may comprise an active metal supported on the support. The support may be selected from one or more of zeolite, silica, alumina and/or other aluminosilicates, and may optionally further include a metal dopant element selected from one or more of Zn, Co, Cu, K, Na, Cs, Mo, Se, Pd, Pt, Ba, Mg, Ca and/or Sr.

In some embodiments, the first chamber 10 and the second chamber 20 may each include the catalyst filling section filled with a catalyst. Specifically, in some embodiments, the first chamber 10 and the second chamber 20 may each include the catalyst filling section filled with the supported catalyst that comprises an active metal supported on the support. The reactor may be configured to operate, or be operated, under conditions in which a first space velocity, which is the space velocity of the catalyst in the first chamber 10 is equal to or greater than a second space velocity, which is the space velocity of the catalyst in the second chamber 20. Here, the space velocity may be a volumetric space velocity, which is calculated by dividing the amount of gas (Nm$^3$/hr) that the catalyst can process per hour by the volume of catalyst filled (Nm$^3$), and may refer to the amount of gas that a unit volume of catalyst can process per hour.

In some embodiments, while the ammonia decomposition reaction is performed in each of the first chamber 10 and the second chamber 20, the ratio of the first space velocity of the catalyst in the first chamber 10 to the second space velocity of the catalyst in the second chamber 20 may be, for example, 1 to 25, 1 to 10, 1 to 5, or more than 1 and less than or equal to 5.

In some embodiments, the catalyst in the first chamber 10 may have a first space velocity of 4,000 $hr^{-1}$ or more during the ammonia decomposition reaction. The first space velocity may be, for example, 4,000 $hr^{-1}$ to 120,000 $hr^{-1}$, or 10,000 $hr^{-1}$ to 100,000 $hr^{-1}$. Accordingly, corrosion within the first chamber 10 may be suppressed, and the conversion rate of ammonia may be effectively controlled.

In some embodiments, the catalyst in the second chamber 20 may have a second space velocity of 1,000 $hr^{-1}$ or more during the ammonia decomposition reaction. The second space velocity may be, for example, 1,000 $hr^{-1}$ to 100,000 $hr^{-1}$, or 4,000 $hr^{-1}$ to 10,000 $hr^{-1}$. Accordingly, corrosion within the second chamber 20 may be suppressed, catalyst performance degradation may be prevented or at least significantly reduced, and the decomposition reaction of unreacted ammonia may proceed efficiently.

For example, the first space velocity and the second space velocity may each be controlled based on the flow rate of the gas stream flowing into the first chamber 10 and the second chamber 20, and the filling volume of the catalyst mounted in each chamber 10 and 20. As a non-limiting example, the flow rate of each gas stream may be measured using a mass flow meter or a volumetric flow meter, and the filling volume of each catalyst may be calculated based on the diameter and height of the catalyst layer. In some embodiments, the catalyst may include an active metal supported on a support, and the support may be doped with a metal element. The support may be, for example, zeolite, silica, alumina, or other aluminosilicates, and the metal element may include, for example, Zn, Co, Cu, K, Na, Cs, Mo, Se, Pd, Pt, Ba, Mg, Ca, and Sr.

The material forming the first chamber 10 included in the ammonia decomposition reactor 100 may include carbon steel, low alloy steel, stainless steel, and/or a nickel-based alloy.

In some embodiments, the first chamber 10 may be formed of carbon steel, low alloy steel, stainless steel, and/or a nickel-based alloy.

In some embodiments, the first chamber 10 may include low alloy steel, stainless steel, and/or a nickel-based alloy.

The low-alloy steel may include, for example, 1% by weight ("wt%") to 35 wt%, 1 wt% to 30 wt%, or 5 wt% to 35 wt% of an alloying element based on the total weight. Non-limiting examples of the alloying element may include carbon, silicon, manganese, nickel, aluminum, chromium, phosphorus, sulfur, molybdenum, copper, nitrogen, cobalt, vanadium, tungsten and other transition metals.

The stainless steel may include, for example, austenitic stainless steel, ferritic stainless steel, martensitic stainless steel, and/or pearlite stainless steel.

In some embodiments, the first chamber 10 may include a nickel-based alloy ($N_T$).

The material forming the second chamber 20 included in the ammonia decomposition reactor 100 may include the nickel-based alloy ($N_T$) satisfying Equation 1. For example, all or part of the interior or the entirety of the second chamber 20 may be formed of the nickel-based alloy ($N_T$).

In some embodiments, the second chamber 20 may be formed of a nickel-based alloy ($N_T$). Accordingly, a decrease in the thermal conductivity of the second chamber 20 may be prevented or suppressed, thereby achieving improved operational stability and energy efficiency.

In some embodiments, the nickel-based alloy ($N_T$) may include 40 wt% to 80 wt% of nickel. The nickel content is based on the total weight of the nickel-based alloy.

In some embodiments, the nickel content of the nickel-based alloy ($N_T$) may be 40 wt% to 78 wt%, or 52 wt% to 75 wt%.

In some embodiments, the nickel-based alloy ($N_T$) may include, for example, a Ni-Cu-Fe-based alloy, a Ni-Cr-Mo-W-based alloy, a Ni-Cr-Fe-Mo-based alloy, and/or a Ni-Cr-Co-W-based alloy.

The nickel-based alloy ($N_T$) may include, for example, one or more alloys selected from the group consisting of UNS N06601, UNS N06625, UNS N06690, UNS N07718, UNS N07792 and UNS N06002, as classified under the unified numbering system (UNS).

In some embodiments, the ammonia decomposition reactor 100 may further include a connection line 1a that connects the first chamber 10 and the second chamber 20.

The connection line 1a may be a connecting pipe and may include a nickel-based alloy ($N_T$).

As a non-limiting example, the first chamber 10 and/or the second chamber 20 may have a heat exchanger-type structure that is continuously supplied with heat, or an adiabatic reactor-type structure in which a preheated gas stream is supplied to facilitate the decomposition reaction.

As a non-limiting example, the first chamber 10 and/or the second chamber 20 may each include an inlet and/or outlet through which a gas stream is introduced or discharged, and one or more of the inlets and outlets may be included as necessary.

As a non-limiting example, the ammonia decomposition reactor 100 may include an operating temperature control device configured to maintain the operating temperature of the first chamber 10 at about 410°C or lower. For example, the operating temperature control device may include a heater, a thermocouple, and/or a controller. The heater may be a heating means operated by, for example, an electric resistance heater, induction heater, or external heat source. The thermocouple may detect the temperature inside the first chamber in real time, and the controller may control the operation of the heater based on temperature information to maintain the temperature within a predetermined range. The configuration or installation method of the operating temperature control device is not particularly limited.

For example, the ammonia decomposition reactor 100 according to the above-described embodiments of the present disclosure may be provided in the form of an ammonia decomposition system including the same.

An ammonia decomposition system according to embodiments of the present disclosure may include the above-described ammonia decomposition reactor 100.

**<Hydrogen production apparatus>**

FIG. 2 is a block diagram schematically illustrating a hydrogen production apparatus according to an embodiment of the present disclosure.

A hydrogen production apparatus 200 according to embodiments of the present disclosure may achieve improved operational stability and energy efficiency by including the above-described ammonia decomposition reactor 100.

In some embodiments, the hydrogen production apparatus 200 may include, for example, an ammonia supply unit 30, a vaporization unit 40, a preheating unit 50, the ammonia decomposition reactor 100, a hydrogen collection unit 60, a hydrogen purification unit 70, a hydrogen storage unit 80, and/or a heat supply unit 90, which may be connected to each other via connection lines. The connection line may be, for example, a connecting pipe.

As non-limiting examples, the connecting pipe may include carbon steel, low alloy steel, stainless steel, and/or a nickel-based alloy.

The layout, length, and other parameters of the connecting pipes may be variously modified as needed.

In one embodiment, the connection line directly connected to the ammonia decomposition reactor 100 may include a nickel-based alloy ($N_T$).

The ammonia supply unit 30 may store and supply ammonia. The ammonia supply unit 30 may store and supply, for example, ammonia in the form of gaseous state (hereinafter, also abbreviated as "gaseous ammonia") or ammonia in the form of liquid state (hereinafter, also abbreviated as "liquid ammonia").

When the ammonia supply unit 30 stores and supplies liquid ammonia, for example, liquid ammonia may be supplied from the ammonia supply unit 30 to the vaporization unit 40, and gaseous ammonia vaporized by a vaporizer may be supplied from the vaporization unit 40 to the first chamber 10.

As a non-limiting example, the ammonia supply unit 30 may be an ammonia storage tank.

The hydrogen production apparatus 200 may include the preheating unit 50 connected to the vaporization unit 40, and the gaseous ammonia may be preheated by a preheater in the preheating unit 50.

In some embodiments, the hydrogen production apparatus 200 may include the hydrogen collection unit 60 into which a third gas stream discharged from the second chamber 20 is introduced. The third gas stream may include residual ammonia that remains undecomposed in the second chamber 20 from the unreacted ammonia, as well as hydrogen and nitrogen.

The hydrogen collection unit 60 may collect hydrogen by separating residual ammonia and/or nitrogen using adsorption-based techniques such as temperature swing adsorption (TSA), pressure swing adsorption (PSA), or vacuum pressure swing adsorption (VPSA). The hydrogen collection unit 60 may be configured to separate residual ammonia and selectively recover high-purity hydrogen from the product stream.

The hydrogen collection unit 60 may include an adsorption tower filled with an adsorbent. The adsorption tower may be, for example, a configuration in which one or more adsorption towers are connected in series or in parallel, a configuration in which one or more towers are connected within a single adsorption tower, or a combination thereof.

The adsorbent may include, for example, a hydrogen-selective adsorbent, a nitrogen-selective adsorbent, and/or an ammonia-selective adsorbent. The adsorbent may include, for example, $CaCl_2/Al_2O_3$, $MgCl_2/Al_2O_3$, silica, alumina, activated carbon, and/or zeolite. The zeolite may have a framework structure such as MFI, CHA, CHA-Cs, CHI, ERI, FAU, FER, GOO, HEU, LTA, MER, MON, MOR, RHO, AEI, AFX, DDR, LEV, RTH, and other documented zeolitic framework structures.

In one embodiment, the structure of the zeolite may be, for example, in the form of CHA, LTA, and/or FAU.

In some embodiments, the hydrogen production apparatus 200 may further include the hydrogen purification unit 70 connected to the hydrogen collection unit 60 and/or the hydrogen storage unit 80.

The hydrogen purification unit 70 may purify hydrogen, for example, using variable pressure adsorption (PSA) or vacuum pressure swing adsorption (VPSA).

The hydrogen storage unit 80 may store hydrogen separated from at least one of the hydrogen collection unit 60 and the hydrogen purification unit 70, for example.

As a non-limiting example, the hydrogen storage unit 80 may be a hydrogen storage tank.

The purity of the hydrogen generated by the hydrogen production apparatus 200 and stored in the hydrogen storage unit 80 may be 99 vol% or more, and may be for example, 99.9 vol% or more.

The production rate of hydrogen stored in the hydrogen storage unit 80 may be 1,300 Nm$^3$/h or more, and may be for example, 1,300 Nm$^3$/h to 800,000 Nm$^3$/h.

The hydrogen production apparatus 200 may utilize, for example, a gas stream discharged from the hydrogen collection unit 60 and/or the hydrogen purification unit 70 as an off-gas stream, a trim gas stream, or other exhaust gas streams. The apparatus may include the heat supply unit 90 configured to recover the off-gas stream, the trim gas stream, or other exhaust gas stream(s), and to generate and supply thermal energy. The off-gas stream, the trim gas stream, or the other exhaust gas streams may include, for example, hydrogen, nitrogen, and/or ammonia.

The heat supply unit 90 may supply thermal energy to the first chamber 10, the second chamber 20, the vaporization unit 40, and/or the preheating unit 50 using the trim gas stream and/or the off-gas stream. In this manner, the trim gas stream or the off-gas stream may be utilized as a heat source for the ammonia decomposition reaction, thereby further enhancing energy efficiency.

As a non-limiting example, the heat supply unit 90 may include a combustor, a heat exchanger, and other thermal management units. The off-gas stream and/or the trim gas stream may be supplied to the combustor for combustion, and the resulting high-temperature combustion gas stream may be used to heat the outer wall of the first chamber 10 or other chambers, or to transfer heat to a heat exchanger coil.

The ammonia supply unit 30, vaporization unit 40, preheating unit 50, ammonia decomposition reactor 100, hydrogen collection unit 60, hydrogen purification unit 70, hydrogen storage unit 80, and/or heat supply unit 90 included in the hydrogen production apparatus 200 may be connected to each other via connection lines 2a, 3a, 4a, 5a, 6a, 7a, 8a, 9a and 10a.

The connection lines may be, for example, connecting pipes.

As a non-limiting example, the connecting pipe may include carbon steel, low alloy steel, stainless steel, and/or a nickel-based alloy.

The layout, length, and other parameters of the connecting pipes may be variously modified as needed.

As a non-limiting example, each of the ammonia supply unit 30, vaporization unit 40, preheating unit 50, ammonia decomposition reactor 100, hydrogen collection unit 60, hydrogen purification unit 70, hydrogen storage unit 80, and/or heat supply unit 90 may include one or more inlets and/or outlets through which a gas stream is introduced or discharged.

## <Method for producing hydrogen >

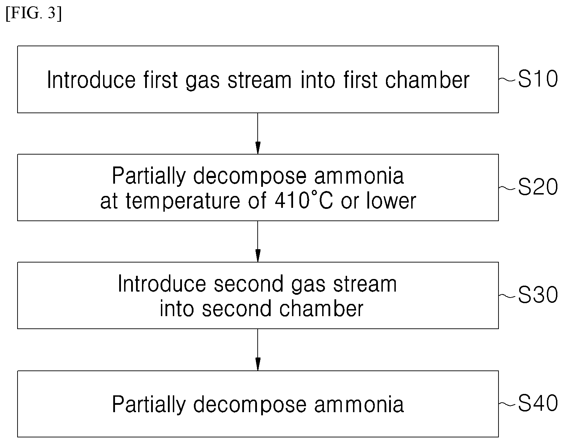

FIG. 3 is a flowchart schematically describing processes of a method for producing hydrogen according to an embodiment of the present disclosure.

The method for producing hydrogen according to embodiments of the present disclosure may generate hydrogen with sustained initial energy efficiency using the above-described ammonia decomposition reactor 100 and/or hydrogen production apparatus 200.

According to the method for producing hydrogen, a first gas stream including ammonia is introduced into the first chamber 10 (S10).

The first gas stream may include ammonia in an amount of, for example, 90 vol% to 100 vol%, 95 vol% to 99.9 vol%, or 99 vol% to 99.999 vol%.

As a non-limiting example, the first gas stream may include 99.9 vol% NH$_3$ and trace amounts of impurities. The impurities may include, for example, water vapor, nitrogen, oxygen, hydrogen, or other trace gases.

In some embodiments, the method for producing hydrogen may provide the first gas stream from the ammonia supply unit 30, which stores and supplies ammonia, to the first chamber 10. Accordingly, the first gas stream may be discharged from the ammonia supply unit 30 and introduced into the first chamber 10.

The ammonia supply unit 30 may store and supply, for example, gaseous ammonia or liquid ammonia.

As a non-limiting example, the ammonia supply unit 30 may provide the liquid ammonia to the vaporization unit 40. When the liquid ammonia is vaporized in the vaporization unit 40, the first gas stream may include gaseous ammonia vaporized by a vaporizer in the vaporization unit 40.

In the first chamber 10, ammonia is partially decomposed at a temperature of 410°C or lower to produce hydrogen and nitrogen (S20).

Accordingly, the second gas stream discharged from the first chamber 10 includes unreacted ammonia that remains undecomposed from the ammonia, as well as hydrogen and nitrogen as decomposition products of the ammonia.

The ammonia decomposition reaction in the first chamber 10 proceeds at a temperature of 410°C or lower, and may be carried out, for example, at a temperature of 250°C to 410°C, 270°C to 390°C, 270°C to 370°C, or 310°C to 370°C.

By carrying out the ammonia decomposition reaction within the above temperature range, corrosion inside the first chamber 10 may be further suppressed, and the rate of nitridation reaction on an inner surface of the second chamber may be reduced by controlling the amount of hydrogen included in the second gas stream.

In some embodiments, ammonia may be partially decomposed in the first chamber 10 such that the conversion rate of ammonia is 1.4% or more.

In some embodiments, ammonia may be partially decomposed in the first chamber 10 at a conversion rate of ammonia of 1.4% or more and 30% or less. In some embodiments, ammonia may be partially decomposed in the first chamber 10 at a conversion rate of ammonia of 1.4% or more and 25% or less.

In the first chamber 10, the conversion rate of ammonia may be, for example, 7% or more, 7.5% or more, 10% or more, 11% to 30%, or 15% to 25%.

A second gas stream including ammonia, nitrogen and hydrogen is discharged from the first chamber and introduced into the second chamber (S30).

In the second chamber, ammonia is partially decomposed to produce hydrogen and nitrogen (S40).

In some embodiments, ammonia may be partially decomposed at a temperature of greater than 410 °C, optionally in a range from greater than 410 °C up to 800 °C in the second chamber (20) to produce hydrogen and nitrogen.

The ammonia decomposition reaction in the second chamber 20 proceeds at a temperature of 500°C or higher, and may be carried out, for example, at a temperature of 500°C to 800°C, 500°C to 780°C, 510°C to 780°C, 510°C to 750°C, or 600°C to 700°C.

**By** carrying out the ammonia decomposition reaction within the above temperature range, the reaction reliability of the second chamber 20 may be improved, and sufficient hydrogen production efficiency may be achieved.

In some embodiments, ammonia may be partially decomposed in the second chamber 20 such that the conversion rate of ammonia is 80% to 99.95%. The conversion rate of ammonia in the second chamber 20 may be, for example, 90% to 99.95%, 95% to 99.95%, or 99% to 99.95%.

In some embodiments, the method for producing hydrogen may further include filling a catalyst in at least one of the first chamber 10 and the second chamber 20. The catalyst may be, for example, filled in a catalyst filling tube and mounted in the first chamber 10 and/or the second chamber 20.

In some embodiments, the method may further include filling the first chamber 10 and the second chamber 20 with a catalyst, and the ammonia decomposition reaction may proceed in each of the first chamber 10 and the second chamber 20 under a condition in which a first space velocity, which is the space velocity of the catalyst in the first chamber 10, is greater than a second space velocity, which is the space velocity of the catalyst in the second chamber 20.

In some embodiments, while the ammonia decomposition reaction is performed in each of the first chamber 10 and the second chamber 20, the ratio of the first space velocity of the catalyst in the first chamber 10 to the second space velocity of the catalyst in the second chamber 20 may be in a range of 1 to 25. The ratio of the first space velocity to the second space velocity may be, for example, 1 to 25, 1 to 10, or 1 to 5.

In some embodiments, the catalyst in the first chamber 10 may have a first space velocity of 4,000 $hr^{-1}$ or more during the ammonia decomposition reaction. The first space velocity may be, for example, 4,000 $hr^{-1}$ to 120,000 $hr^{-1}$, or 10,000 $hr^{-1}$ to 100,000 $hr^{-1}$. Accordingly, corrosion within the first chamber 10 may be suppressed, and the ammonia conversion rate may be effectively controlled.

**In** some embodiments, the catalyst in the second chamber 20 may have a second space velocity of 1,000 $hr^{-1}$ or more during the ammonia decomposition reaction. The second space velocity may be, for example, 1,000 $hr^{-1}$ to 100,000 $hr^{-1}$, or 4,000 $hr^{-1}$ to 10,000 $hr^{-1}$. Accordingly, corrosion within the second chamber 20 may be suppressed, catalyst performance degradation may be prevented, and the decomposition reaction of unreacted ammonia may proceed efficiently.

In some embodiments, the method for producing hydrogen may introduce a third gas stream discharged from the second chamber 20 into the hydrogen collection unit 60. The third gas stream may include unreacted ammonia that remains undecomposed in the second chamber 20, as well as hydrogen and nitrogen.

The hydrogen collection unit 60 may separate residual ammonia, or separate and collect hydrogen using adsorption-based techniques such as temperature swing adsorption (TSA), pressure swing adsorption (PSA), or vacuum pressure swing adsorption (VPSA).

The hydrogen collection unit 60 may include an adsorption tower filled with an adsorbent. The adsorbent and the adsorption tower are as described above.

In some embodiments, the method for producing hydrogen may introduce a fourth gas stream discharged from the hydrogen collection unit 60 into the hydrogen purification unit 70.

In some embodiments, the method for producing hydrogen may introduce hydrogen discharged from the hydrogen purification unit 70 into the hydrogen storage unit 80.

The hydrogen purification unit 70 may purify hydrogen, for example, using variable pressure adsorption (PSA) or vacuum pressure swing adsorption (VPSA).

The hydrogen storage unit 80 may store hydrogen separated from at least one of the hydrogen collection unit 60 and the hydrogen purification unit 70. As a non-limiting example, the hydrogen storage unit 80 may be a hydrogen storage tank.

The purity of the hydrogen generated by the method for producing hydrogen and stored in the hydrogen storage unit 80 may be 99 vol% or more, and may be for example, 99.9 vol% or more.

The production rate of the hydrogen stored in the hydrogen storage unit 80 may be 1,300 Nm$^3$/h or more, and may be for example, 1,300 Nm$^3$/h to 800,000 Nm$^3$/h or more.

In some embodiments, the off-gas stream, trim gas stream, or other exhaust gas stream(s) discharged from the hydrogen collection unit 60 and/or the hydrogen purification unit 70 may be introduced into the heat supply unit 90. The off-gas stream, trim gas stream, or other exhaust gas stream(s) may include, for example, hydrogen, nitrogen and/or ammonia.

**Example 1**

A hydrogen production apparatus was manufactured, including an ammonia storage tank made of SUS304; an ammonia decomposition reactor having a first chamber made of SUS304 and a second chamber made of Inconel 625; a hydrogen collection unit made of SUS304; a hydrogen purification unit made of SUS304; and a hydrogen storage tank made of SUS304. These components were connected in the order described above using connecting pipes. The connecting pipe that connects the first and second chambers was made of Inconel 625, and the remaining connecting pipes were made of SUS304.

Each of the first and second chambers was equipped with a catalyst filling tube. The separation of hydrogen and ammonia in the hydrogen collection unit and the hydrogen purification unit was performed using an adsorption tower based on temperature swing adsorption (TSA). Zeolite 5A was used as the adsorbent packed in the adsorption tower.

Hydrogen was produced using the manufactured hydrogen production apparatus according to the conditions listed in Tables 1 and 2 below.

**Example 2**

A hydrogen production apparatus was manufactured by the same method as in Example 1, except that the second chamber and the connecting pipe that connects the first and second chambers were made of Inconel 601.

Hydrogen was produced using the manufactured hydrogen production apparatus according to the conditions listed in Tables 1 and 2 below.

**Example 3**

A hydrogen production apparatus was manufactured by the same method as in Example 1, except that the first chamber was made of carbon steel.

**Hydrogen** was produced using the manufactured hydrogen production apparatus according to the conditions listed in Tables 1 and 2 below.

**Example 4**

Hydrogen was produced using the hydrogen production apparatus manufactured in Example 1, according to the conditions listed in Tables 1 and 2 below.

**Example 5**

Hydrogen was produced using the hydrogen production apparatus manufactured in Example 1, according to the conditions listed in Tables 1 and 2 below.

**Comparative Example 1**

A hydrogen production apparatus was manufactured by the same method as in Example 1, except that it included an ammonia decomposition reactor having the second chamber but not the first chamber. The second chamber was formed in the same manner as the second chamber in Example 1.

Hydrogen was produced using the manufactured hydrogen production apparatus according to the conditions listed in Table 2 below.

**Comparative Example 2**

A hydrogen production apparatus was manufactured by the same method as in Example 1, except that the second chamber was made of SUS304.

Hydrogen was produced using the manufactured hydrogen production apparatus according to the conditions listed in Tables 1 and 2 below.

**Comparative Example 3**

A hydrogen production apparatus was manufactured by the same method as in Example 1, except that the second chamber was made of SUS316.

Hydrogen was produced using the manufactured hydrogen production apparatus according to the conditions listed in Tables 1 and 2 below.

**Comparative Example 4**

A hydrogen production apparatus was manufactured by the same method as Comparative Example 1, except that the second chamber was made of Inconel 601.

Hydrogen was produced using the manufactured hydrogen production apparatus according to the conditions listed in Table 2 below.

[TABLE 1]

| | First chamber | | | | | |
|---|---|---|---|---|---|---|
| | Inlet temperature | Outlet temperature | Operating temperature | Gas stream | Space velocity of catalyst $(hr^{-1})$ | Ammonia conversion rate (%) |
| Example 1 | 350°C | 300°C | 350±10°C | 99.99999 vol% $NH_3$ | 15,000 | 10 |
| Example 2 | 350°C | 300°C | 350±10°C | | 15,000 | 10 |
| Example 3 | 350°C | 300°C | 350±10°C | | 15,000 | 10 |
| Example 4 | 350°C | 340°C | 350±10°C | | 80,000 | 1.4 |
| Example 5 | 350°C | 340°C | 350±10°C | | 125,000 | 0.7 |
| Comparative Example 1 | | | | | | |
| Comparative Example 2 | 350°C | 300°C | 350±10°C | 99.99999 vol% $NH_3$ | 15,000 | 10 |
| Comparative Example 3 | 350°C | 300°C | 350±10°C | | 15,000 | 10 |
| Comparative Example 4 | | | | | | |

[TABLE 2]

| | Second chamber | | | | | | | |
|---|---|---|---|---|---|---|---|---|
| | Inlet temperature | Outlet temperature | Operating temperature | Gas stream (vol% of) | | | Space velocity of catalyst $(hr^{-1})$ | Ammonia conversion rate (%) |
| | | | | $NH_3$ | $H_2$ | $N_2$ | | |
| Example 1 | 475°C | 550°C | 510±10°C | 81.8 | 13.6 | 4.5 | 10,000 | 99 |
| Example 2 | 475°C | 550°C | 510±10°C | 81.8 | 13.6 | 4.5 | 10,000 | 99 |
| Example 3 | 475°C | 550°C | 510±10°C | 81.8 | 13.6 | 4.5 | 10,000 | 99 |
| Example 4 | 475°C | 550°C | 510±10°C | 97.2 | 2.1 | 0.7 | 10,000 | 99 |
| Example 5 | 475°C | 550°C | 510±10°C | 98.6 | 1.0 | 0.3 | 10,000 | 99 |
| Comparative Example 1 | 475°C | 550°C | 510±10°C | 99.99999 vol% $NH_3$ | | | 10,000 | 99 |
| Comparative Example 2 | 475°C | 550°C | 510±10°C | 81.8 | 13.6 | 4.5 | 10,000 | 99 |

(continued)

| | Second chamber | | | | | | | |
| --- | --- | --- | --- | --- | --- | --- | --- | --- |
| | Inlet temperature | Outlet temperature | Operating temperature | Gas stream (vol% of) | | | Space velocity of catalyst (hr-1) | Ammonia conversion rate (%) |
| | | | | $NH_3$ | $H_2$ | $N_2$ | | |
| Comparative Example 3 | 475°C | 550°C | 510±10°C | 81.8 | 13.6 | 4.5 | 10,000 | 99 |
| Comparative Example 4 | 475°C | 550°C | 510±10°C | 99.99999 vol% $NH_3$ | | | 10,000 | 99 |

**Experimental Examples**

Experimental Example 1: Evaluation of corrosion resistance

In the above-described examples and comparative examples, the corrosion resistance of the inner surfaces of the first and second chambers was evaluated using metal specimens made of the same material as their inner surfaces (hereinafter, "corresponding metal specimens").

Under substantially the same conditions, the ammonia-induced nitridation reaction occurring on the inner surfaces of the first and second chambers was considered to proceed at substantially the same rate according to the same reaction equation on the surfaces of the corresponding metal specimens, even taking into account test errors and differences in surface conditions. In this case, it was confirmed that the presence or absence of a catalyst in the first and second chambers had no significant effect on the ammonia-induced nitridation reaction.

Therefore, the corrosion resistance evaluation results for the corresponding metal specimens were used as indicators for evaluating the corrosion resistance characteristics of the inner surfaces of the first and second chambers.

(1) Corrosion resistance of first chamber according to operating temperature

1) In Example 1, cylindrical metal specimens having a circular cross-sectional diameter of 2 mm and a height of 200 mm were prepared using the same material as that of the first chamber (SUS304) (hereinafter referred to as "cylindrical specimens").

In addition, cylindrical specimens made of SUS316 and Inconel 625 were prepared using the same method and designated as Examples 1-1 and 1-2, respectively.

A vertical quartz tube reactor connected to a gas stream supply section, a gas stream discharge section and a furnace was prepared.

Each cylindrical specimen was mounted in the vertical quartz tube reactor, and the temperature inside the vertical quartz tube reactor was increased to the operating temperature at a heating rate of 10°C/min. At this time, a gas stream including 99.99999 vol% $NH_3$ was continuously supplied to the vertical quartz tube reactor.

The operating temperature of the vertical quartz tube reactor was increased in 10°C increments from 300°C to 450°C, and the vertical quartz tube reactor was operated at the operating temperature for 36 hours to obtain nitrided cylindrical specimens.

From one end of the nitrided cylindrical specimens, sectioning was performed at 5 mm intervals along the height in a direction perpendicular to the height, thereby obtaining 41 specimens. SEM images of the cut circular cross-sections of the obtained specimens were taken using a scanning electron microscope (SEM) (Helios PFIB instrument, Thermo Fisher Scientific). Appropriate magnification levels were selected to accurately measure the nitrided depths. For example, magnifications of 2000x and 500x were used for nitrided depths of 40 $\mu$m or less and greater than 40 $\mu$m, respectively.

For the SEM images, the elemental composition within the SEM images was analyzed using the energy dispersive X-ray spectroscopy (EDS) function of the same SEM instrument.

Based on the analysis results of the elemental composition, the nitrided depths were measured from three arbitrary points on the outermost edge of the circular cross-section toward the central axis.

The corrosion resistance was evaluated to be higher when the maximum value among the nitrided depths was smaller.

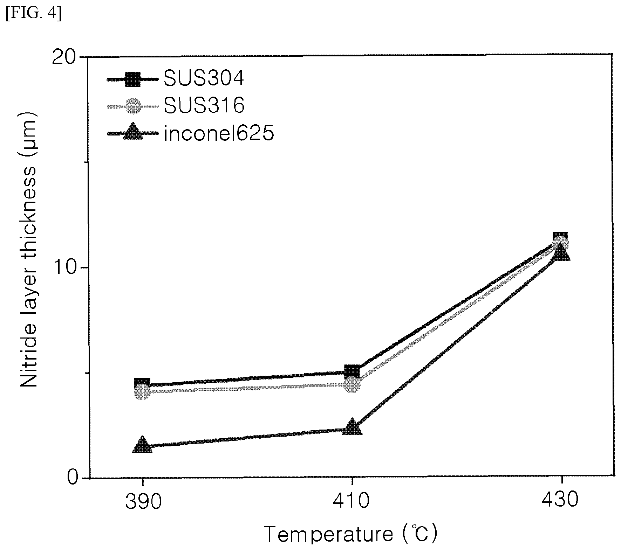

The results are shown in Table 3 and FIG. 4. Since it is impractical to present the nitrided depths at all temperatures in Table 3, representative data at 390°C, 410°C, and 430°C are described.

[TABLE 3]

| Operating temperature | Example 1 (SUS304) | Example 1-1 (SUS316) | Example 1-2 (Inconel 625) |
|---|---|---|---|
| 390°C | 4.4 μm | 4.1 μm | 1.5 μm |
| 410°C | 5.0 μm | 4.4 μm | 2.3 μm |
| 430°C | 11.2 μm | 11.0 μm | 10.5 μm |

2) Cylindrical specimens made of SUS304, SUS316, and Inconel 625 were prepared by the same method as described above.

The maximum nitrided depths were evaluated by the same method as described above, except that the operating time of the vertical quartz tube reactor was changed to 100 hours.

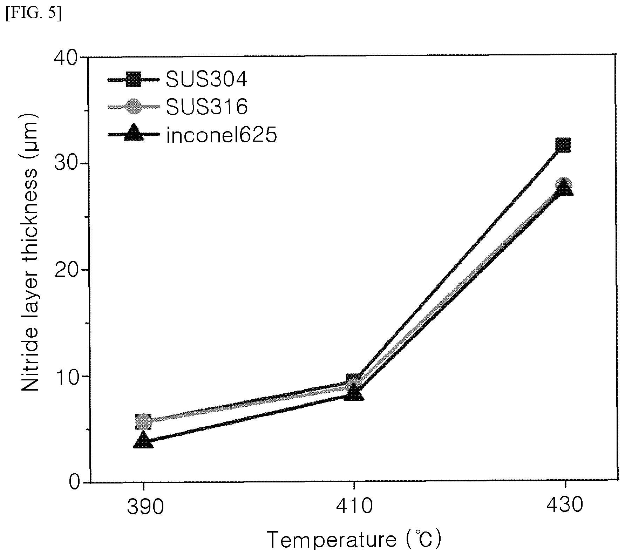

The results are shown in Table 4 and FIG. 5.

[TABLE 4]

| Operating temperature | Example 1 (SUS304) | Example 1-1 (SUS316) | Example 1-2 (Inconel 625) |
|---|---|---|---|
| 390°C | 5.7 μm | 5.7 μm | 3.8 μm |
| 410°C | 9.4 μm | 8.9 μm | 8.2 μm |
| 430°C | 31.5 μm | 27.7 μm | 27.3 μm |

From Tables 3 and 4, and FIGS. 4 and 5, it was confirmed that corrosion on the internal surface of the first chamber began to sharply increase at temperatures exceeding 410°C. In addition, as the operating time increased under conditions exceeding 410°C, the corrosion rate on the internal surface of the first chamber further accelerated.

(2) Corrosion resistance of first chamber over operating time

In Examples 1 to 5, cylindrical metal specimens having a circular cross-sectional diameter of 2 mm and a height of 200 mm were prepared using the same material as that of the first chamber (hereinafter referred to as "cylindrical specimens").

A vertical quartz tube reactor connected to a gas stream supply section, a gas stream discharge section and a furnace was prepared.

The cylindrical specimens were mounted in the vertical quartz tube reactor, and the temperature inside the vertical quartz tube reactor was increased at a heating rate of 10°C/min to the first chamber operating temperature corresponding to Table 1.

Thereafter, the cylindrical specimens were exposed to an environment corresponding to Table 1 for 100 hours from the time the first chamber operating temperature was reached, thereby obtaining nitrided cylindrical specimens.

For the nitrided cylindrical specimens, the maximum nitrided depths were evaluated by the same method as described above.

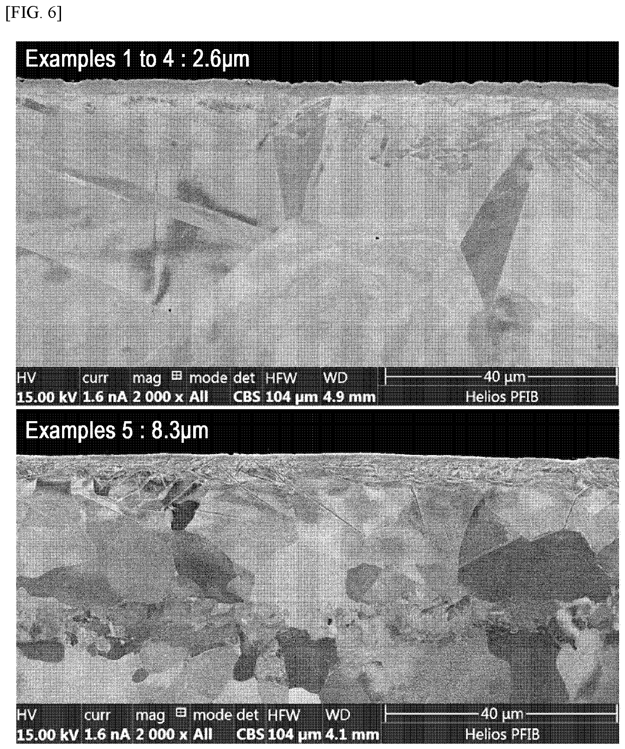

The results are shown in Table 5 and FIG. 6.

(3) Corrosion resistance of second chamber over operating time

In Examples 1 to 5 and Comparative Examples 1 to 4, cylindrical metal specimens having a circular cross-sectional diameter of 2 mm and a height of 200 mm were prepared using the same material as that of the second chamber (hereinafter referred to as "cylindrical specimens").

A vertical quartz tube reactor connected to a gas stream supply section, a gas stream discharge section and a furnace was prepared.

The cylindrical specimens were mounted in the vertical quartz tube reactor, and the temperature inside the vertical quartz tube reactor was increased at a heating rate of 10°C/min to the second chamber operating temperature corresponding to Table 2.

Thereafter, the cylindrical specimens were exposed to an environment corresponding to Table 2 for 100 hours from the time the second chamber operating temperature was reached, thereby obtaining nitrided cylindrical specimens.

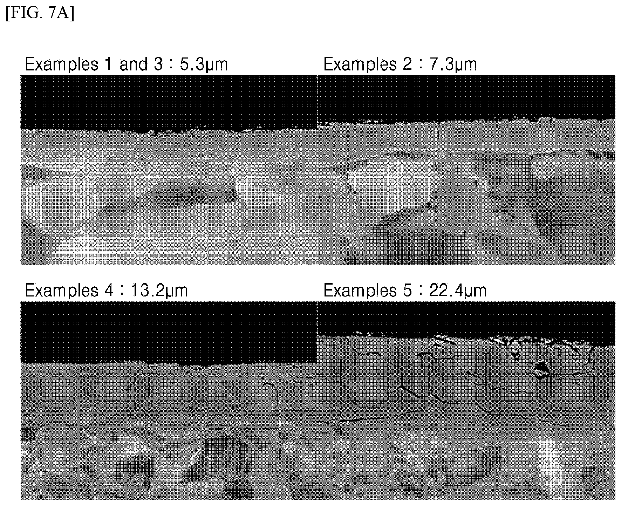

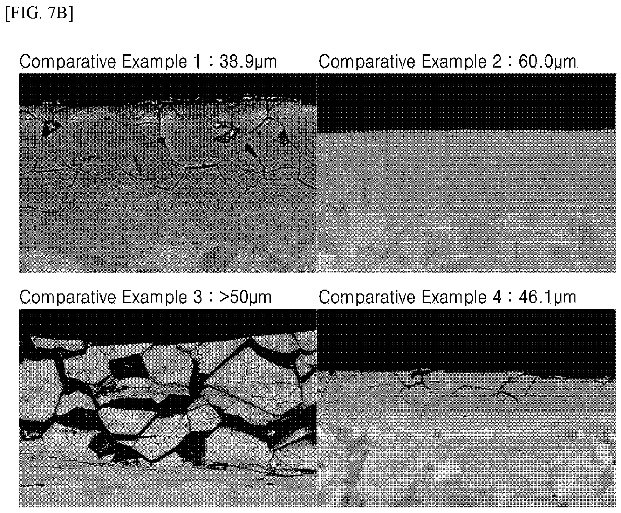

For the nitrided cylindrical specimens, the maximum nitrided depths were evaluated by the same method as described above. The results are shown in Table 5 and FIGS. 7A and 7B.

The SEM measurement conditions in Examples 1 to 5 and Comparative Example 1 are as follows:

HV (High Voltage): 15.00 kV;

CURR (Beam Current): 1.6 nA;

MAG (Magnification): 2000x;

DET (Detector): CBS (Circular Backscatter Detector).

The SEM measurement conditions in Comparative Examples 2 to 4 are as follows:

HV (High Voltage): 15.00 kV;

CURR (Beam Current): 1.6 nA;

MAG (Magnification): 500x;

DET (Detector): CBS (Circular Backscatter Detector).

[TABLE 5]

| | Corrosion resistance of first chamber (maximum nitrided depth) | Corrosion resistance of second chamber (maximum nitrided depth) |
|---|---|---|
| Example 1 | 2.6 $\mu$m | 5.3 $\mu$m |
| Example 2 | 2.6 $\mu$m | 7.3 $\mu$m |
| Example 3 | 8.3 $\mu$m | 5.3 $\mu$m |
| Example 4 | 2.6 $\mu$m | 13 $\mu$m |
| Example 5 | 2.6 $\mu$m | 22 $\mu$m |
| Comparative Example 1 | - | 39 $\mu$m |
| Comparative Example 2 | 2.6 $\mu$m | 60 $\mu$m |
| Comparative Example 3 | 2.6 $\mu$m | >50 $\mu$m |
| Comparative Example 4 | - | 46.1 $\mu$m |

Referring to Table 5, in Example 3, which employed a first chamber made of carbon steel, a relatively high level of corrosion was observed after long-term operation.

Conversely, the second chambers of the examples including the nickel-based alloy ($N_T$) satisfying Equation 1 described above exhibited minimal corrosion even after long-term operation, indicating improved reliability and stability.

In Example 5, due to the relatively low hydrogen concentration in the gas stream supplied to the second chamber, the corrosion resistance was reduced.

In Comparative Examples 1 and 4, a gas stream including 99.99999 vol% $NH_3$ was supplied directly to the high-temperature second chamber without passing through the chamber, resulting in rapid nitridation, and thus, the reliability and stability deteriorated during long-term operation. In Comparative Example 4, where the second chamber was made of Inconel 601, the corrosion rate increased further.

In Comparative Examples 2 and 3, the second chamber was made of SUS304 and SUS316, respectively, and since these materials did not satisfy Equation 1, their corrosion resistance further deteriorated after long-term operation.

Experimental Example 2: Evaluation of corrosion rate

(1) Corrosion rate of first chamber

In Examples 1 to 5, cylindrical metal specimens having a circular cross-sectional diameter of 2 mm and a height of 200 mm were prepared using the same material as that of the first chamber (hereinafter referred to as "cylindrical specimens").

A vertical quartz tube reactor connected to a gas stream supply section, a gas stream discharge section and a furnace was prepared.

The cylindrical specimens were mounted in the vertical quartz tube reactor, and the temperature inside the vertical quartz tube reactor was increased at a heating rate of 10°C/min to the first chamber operating temperature corresponding to Table 1.

Thereafter, the cylindrical specimens were exposed to an environment corresponding to Table 1 for 36 hours, 100 hours, 200 hours, and 400 hours, respectively, from the time the first chamber operating temperature was reached, thereby obtaining nitrided cylindrical specimens.

For the nitrided cylindrical specimens, the maximum nitrided depths were evaluated by the same method as described above.

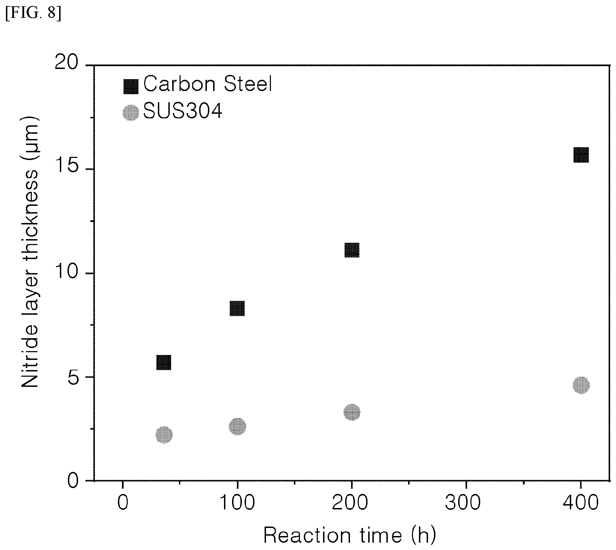

The results are shown in Table 6 and FIG. 8.

[TABLE 6]

| | | Examples 1, 2, 4, and 5 | Example 3 |
|---|---|---|---|
| Material | | SUS304 | Carbon steel |
| Maximum nitrided depth (μm) | 36 hr | 2.2 | 5.7 |
| | 100 hr | 2.6 | 8.3 |
| | 200 hr | 3.3 | 11.1 |
| | 400 hr | 4.6 | 15.7 |

According to Table 6, as the operating time increased at an operating temperature of $350\pm10°C$, the corrosion rate increased more significantly in Example 4, which employed a first chamber made of carbon steel, than in the other examples.

(2) Corrosion rate of second chamber

In Example 1 and Comparative Examples 2 and 3, cylindrical metal specimens having a circular cross-sectional diameter of 2 mm and a height of 200 mm were prepared using the same material as that of the second chamber (hereinafter referred to as "cylindrical specimens").

A vertical quartz tube reactor connected to a gas stream supply section and a furnace was prepared.

The cylindrical specimens were mounted in the vertical quartz tube reactor, and the temperature inside the vertical quartz tube reactor was increased at a heating rate of 10°C/min to the second chamber operating temperature corresponding to Table 2.

Thereafter, the cylindrical specimens were exposed to an environment corresponding to Table 2 for 36 hours, 100 hours, 200 hours, and 400 hours, respectively, from the time the second chamber operating temperature was reached, thereby obtaining nitrided cylindrical specimens.

For the nitrided cylindrical specimens, the maximum nitrided depths were evaluated by the same method as described above.

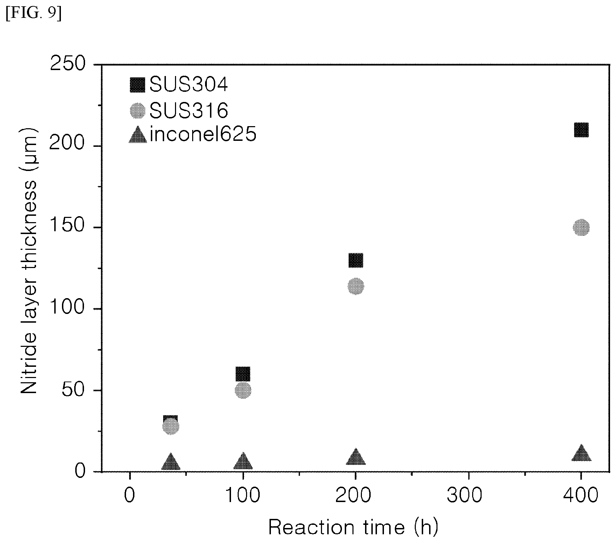

The results are shown in Table 7 and FIG. 9.

[TABLE 7]

| | | Example 1 | Comparative Example 2 | Comparative Example 3 |
|---|---|---|---|---|
| Material | | Inconel 625 | SUS304 | SUS316 |
| Maximum nitrided depth (μm) | 36 hr | 4.8 | 30 | 28 |
| | 100 hr | 5.3 | 60 | 50 |
| | 200 hr | 7.9 | 130 | 114 |
| | 400 hr | 10.2 | 210 | 150 |

Referring to Table 7, at an operating temperature of $510 \pm 10°C$, the degree of nitridation for the second chamber in Example 1, which included the nickel-based alloy ($N_T$) satisfying Equation 1 described above, was very low. Even after long-term operation, the increase in the maximum nitrided depth was significantly reduced, demonstrating improved reliability and stability.

Conversely, in the comparative examples, which employed second chambers made of SUS304 and SUS316, respectively, the corrosion resistance deteriorated at the above operating temperature, and the increase in corrosion rate became more significant with increasing operating time.

Experimental Example 3: Hydrogen production efficiency

Hydrogen was produced under the following conditions using the hydrogen production apparatuses according to Examples 1 to 5.

Inflow rate of the first gas stream introduced into the first chamber: 1041.7 kg/hr
Outflow rate of the second gas stream discharged from the first chamber: 1041.7 kg/hr
Inflow rate of the second gas stream introduced into the second chamber: 1041.7 kg/hr
Outflow rate of the third gas stream discharged from the second chamber: 1041.7 kg/hr

The hydrogen produced by the hydrogen production apparatus and stored in the hydrogen storage unit had a purity of 99.9 vol%, and the hydrogen production rate was 2,040.3 $Nm^3$/hr in Examples 1 to 3, 2,038.5 $Nm^3$/hr in Example 4, and 2,038.4 $Nm^3$/hr in Example 5.

**Claims**

1. An ammonia decomposition reactor (100), comprising:

   a first chamber (10) arranged to be fed with a first gas stream comprising ammonia; and
   a second chamber (20) arranged to be fed with a second gas stream, which is discharged from the first chamber (10) and comprises ammonia, nitrogen and hydrogen,
   wherein the first chamber (10) is configured to operate at an operating temperature of 410°C or less,
   wherein the first chamber (10) comprises at least one selected from the group consisting of carbon steel, low alloy steel, stainless steel, and a nickel-based alloy, and
   wherein the second chamber (20) comprises a nickel-based alloy ($N_T$) satisfying Equation 1 below:

$$[\text{Equation 1}]$$

$$T \leq 15 \; \mu m,$$

   in Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream comprising 97.2% by volume $NH_3$, 2.1% by volume $H_2$, and 0.7% by volume $N_2$ in a temperature environment of 500°C for 100 hours, and the nitrided depths are measured using scanning electron microscopy (SEM) and energy dispersive X-ray spectroscopy (EDS) analysis.

2. The ammonia decomposition reactor (100) according to claim 1, wherein the first gas stream comprises ammonia in an amount of 90% by volume to 100% by volume with respect to the entire first gas stream volume.

3. The ammonia decomposition reactor (100) according to claim 1 or 2, wherein the second chamber (20) is configured to operate at an operating temperature of greater than 410°C, optionally in a range from greater than 410°C up to 800°C.

4. The ammonia decomposition reactor (100) according to any one of claims 1 to 3, wherein a conversion rate of ammonia in the first chamber (10) is 1.4% or more, and a conversion rate of ammonia in the second chamber (20) is 80% to 99.95%.

5. The ammonia decomposition reactor (100) according to any one of claims 1 to 4, wherein at least one of the first chamber (10) and the second chamber (20) comprises a catalyst filling section filled with a catalyst.

6. The ammonia decomposition reactor (100) according to claim 1 to 5, wherein each of the first chamber (10) and the second chamber (20) comprises the catalyst filling section filled with the catalyst, and the reactor is configured to operate under conditions in which a first space velocity, which is the space velocity of the catalyst in the first chamber (10), is equal to or greater than a second space velocity, which is the space velocity of the catalyst in the second chamber (20).

7. The ammonia decomposition reactor (100) according to claim 6, wherein, a ratio of the first space velocity of the catalyst in the first chamber (10) to the second space velocity of the catalyst in the second chamber (20) is in a range of 1 to 25, optionally in a range of 1 to 5, during ammonia decomposition reactions in each of the first chamber (10) and the second chamber (20).

8. A hydrogen production apparatus (200) comprising the ammonia decomposition reactor (100) according to any one of claims 1 to 7.

9. A method for producing hydrogen via ammonia decomposition, comprising:

introducing a first gas stream comprising ammonia into a first chamber (10);
partially decomposing ammonia at a temperature of 410°C or less in the first chamber (10) to produce hydrogen and nitrogen;
introducing a second gas stream, which is discharged from the first chamber (10) and comprises ammonia, nitrogen and hydrogen, into a second chamber (20); and
partially decomposing ammonia in the second chamber (20) to produce hydrogen and nitrogen,
wherein the first chamber (10) comprises at least one selected from the group consisting of carbon steel, low alloy steel, stainless steel, and a nickel-based alloy, and
wherein the second chamber (20) comprises a nickel-based alloy ($N_T$) satisfying Equation 1 below:

$$[\text{Equation 1}]$$

$$T \leq 15 \ \mu m,$$

in Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream comprising 97.2% by volume $NH_3$, 2.1% by volume $H_2$, and 0.7% by volume $N_2$ in a temperature environment of 500°C for 100 hours, and the depths are measured using scanning electron microscopy (SEM) and energy dispersive X-ray spectroscopy (EDS) analysis.

10. The method for producing hydrogen according to claim 9, wherein the first gas stream comprises ammonia in an amount of 90% by volume to 100% by volume with respect to the entire first gas stream volume.

11. The method for producing hydrogen according to claim 9 or 10, wherein ammonia is partially decomposed in the first chamber (10) at a conversion rate of ammonia of 1.4% or more, and wherein ammonia is partially decomposed in the second chamber (20) at a conversion rate of ammonia of 80% to 99.95%.

12. The method for producing hydrogen according to any one of claims 9 to 11, wherein partially decomposing ammonia at a temperature of greater than 410°C, optionally in a range from greater than 410°C up to 800°C in the second chamber (20) to produce hydrogen and nitrogen.

13. The method for producing hydrogen according to any one of claims 9 to 12, further comprising filling a catalyst into at least one of the first chamber (10) and the second chamber (20).

14. The method for producing hydrogen according to claim 13, further comprising filling a catalyst into each of the first chamber (10) and the second chamber (20), and the ammonia decomposition reactions are performed in each of the first chamber (10) and the second chamber (20) under operating conditions in which a first space velocity, which is the space velocity of the catalyst in the first chamber (10), is equal to or greater than a second space velocity, which is the space velocity of the catalyst in the second chamber (20).

15. The method for producing hydrogen according to claim 13, wherein a ratio of the first space velocity of the catalyst in the first chamber (10) to the second space velocity of the catalyst in the second chamber (20) is maintained in a range of 1 to 25, optionally in a range of 1 to 5, during ammonia decomposition reactions in each of the first chamber (10) and the second chamber (20).

[FIG. 1]

100

1a

10    20

[FIG. 2]

200

90

10a    8a

9a

10    1a

30    2a    40    3a    50    20    6a    7a

4a    5a    60    70    80

[FIG. 3]

| Introduce first gas stream into first chamber | ~S10 |

↓

| Partially decompose ammonia<br>at temperature of 410°C or lower | ~S20 |

↓

| Introduce second gas stream<br>into second chamber | ~S30 |

↓

| Partially decompose ammonia | ~S40 |

[FIG. 4]

[FIG. 5]

[FIG. 6]

[FIG. 7A]

Examples 1 and 3 : 5.3µm

Examples 2 : 7.3µm

Examples 4 : 13.2µm

Examples 5 : 22.4µm

[FIG. 7B]

Comparative Example 1 : 38.9μm    Comparative Example 2 : 60.0μm

Comparative Example 3 : >50μm    Comparative Example 4 : 46.1μm

[FIG. 8]

[FIG. 9]

**EUROPEAN SEARCH REPORT**

Application Number

EP 25 20 1434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 625 908 A (JOHNSON MATTHEY PLC [GB]) 3 July 2024 (2024-07-03) * page 1, line 9 - line 12; claims; figure 4 * * page 2, line 21 - line 26 * * page 2, line 1 - line 8 * ----- | 1-15 | INV. C01B3/047 C22C19/03 B01J19/02 F02C3/22 H01M8/0606 H01M8/22 C22C38/00 C22C38/40 |
| X | US 2024/166503 A1 (WHITE VINCENT [GB] ET AL) 23 May 2024 (2024-05-23) * paragraphs [0149] - [0152], [0155], [0158] - [0159]; figure 1; tables 1, 2 * * paragraph [0083] - paragraph [0084] * ----- | 1-15 | |
| A | JP 6 943524 B2 (SHOWA DENKO KK [JP]) 6 October 2021 (2021-10-06) * paragraphs [0015], [0029] - [0031], [0036], [0037]; figures 1,2 * ----- | 1-15 | |
| A | WO 2022/189560 A1 (TOPSOE AS [DK]) 15 September 2022 (2022-09-15) * page 7, line 4 - line 26 * ----- | 1-15 | |

TECHNICAL FIELDS SEARCHED (IPC)

C01B
C22C
F02C
B01J
H01M

The present search report has been drawn up for all claims

| Place of search | Date of completion of the search | Examiner |
|---|---|---|
| The Hague | 18 February 2026 | Engelen, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 717 665 A1

## ANNEX TO THE EUROPEAN SEARCH REPORT
## ON EUROPEAN PATENT APPLICATION NO.

EP 25 20 1434

18-02-2026

| Patent document cited in search report | | | Publication date | Patent family member(s) | | | Publication date |
|---|---|---|---|---|---|---|---|
| GB 2625908 | A | | 03-07-2024 | CN | 119998228 | A | 13-05-2025 |
| | | | | EP | 4619339 | A1 | 24-09-2025 |
| | | | | GB | 2625908 | A | 03-07-2024 |
| | | | | JP | 2025532364 | A | 29-09-2025 |
| | | | | KR | 20250106272 | A | 09-07-2025 |
| | | | | TW | 202440454 | A | 16-10-2024 |
| | | | | WO | 2024105393 | A1 | 23-05-2024 |
| US 2024166503 | A1 | | 23-05-2024 | AU | 2023266326 | A1 | 06-06-2024 |
| | | | | CA | 3220532 | A1 | 21-05-2024 |
| | | | | CN | 118056779 | A | 21-05-2024 |
| | | | | EP | 4378885 | A1 | 05-06-2024 |
| | | | | JP | 7747713 | B2 | 01-10-2025 |
| | | | | JP | 2024074792 | A | 31-05-2024 |
| | | | | KR | 20240074688 | A | 28-05-2024 |
| | | | | US | 2024166503 | A1 | 23-05-2024 |
| JP 6943524 | B2 | | 06-10-2021 | JP | 6943524 | B2 | 06-10-2021 |
| | | | | JP | WO2017154732 | A1 | 10-01-2019 |
| | | | | TW | 201803802 | A | 01-02-2018 |
| | | | | WO | 2017154732 | A1 | 14-09-2017 |
| WO 2022189560 | A1 | | 15-09-2022 | AR | 125527 | A1 | 26-07-2023 |
| | | | | EP | 4304980 | A1 | 17-01-2024 |
| | | | | JP | 2024510733 | A | 11-03-2024 |
| | | | | KR | 20230154201 | A | 07-11-2023 |
| | | | | WO | 2022189560 | A1 | 15-09-2022 |

EPO FORM P0459